# EUROPEAN PATENT APPLICATION

(11) **EP 4 518 285 A1**
(43) Date of publication of application: **05.03.2025**
(21) Application number: 23194136.0
(22) Date of filing: 30.08.2023
(51) Int. Cl.: H04L 49/354, H04L 49/65

(54) **A SYSTEM FOR CONFIGURING UNMANAGED SWITCHES AND METHOD FOR THE SAME**

(71) Applicant: Siemens Aktiengesellschaft, 80333 München (DE)
(72) Inventor: Gonul, Mustafa, 34406 Kagithane (TR); Meisinger, Andreas, 92287 Schmidmühlen (DE); Schwering, Wolfgang, 91341 Röttenbach (DE); Seker, Isa Ceyhun, 34732 Kadikoy (TR)
(74) Representative: Siemens Patent Attorneys

(57) **Abstract**

There is provided a system comprising at least one unmanaged switch having at least one first port, at least one second port, and at least one register for controlling the at least one first port and at least one second port; at least one master device, connected to the first port of the switch, wherein the master device is adapted to send tagged ethernet frames to modify said register. The invention further relates to a method for the system.

## Description

### Technical Field

Present invention relates to a system and a method for configuring unmanaged switches.

### Background Art

Network switches are devices that facilitate connections between various devices. These switches consist of multiple Ethernet ports, enabling them to establish connections between a device's port and one of its own ports. This connection establishes a link between the device and the network switch. When multiple devices are connected to the switch, it serves to establish connections between them.

Network switches are used in personal applications as well as in the industrial applications. For example, in order to connect plurality of devices (such as computers) to a network (an intranet or the Internet), the devices are connected to a switch through Ethernet cables.

In the personal applications, users simply connect their device to the switch and directly use the device. However, in the industrial applications, switches may need to be configured. Therefore in the known art, unmanaged and managed switches are used to meet different user needs. As disclosed in the patent document no. US2021359876A1, in the manged switches, different ports of the switch is able to be controlled. With this control in place, it becomes feasible to create virtual local area networks (VLANs), gather port statistics, and configure MAC learning preferences, among other functionalities. In order to provide such functionalities, managed switches uses special hardware and/or software components. As a result of these components, managed switches can become more expensive. On the other hand, unmanaged switches, which provide a simple connection between devices do not use such costly components.

### Brief Description of the Invention

It is an object of the exemplary embodiment of the present invention provide a system and a method for configuring unmanaged switches in a cost effective and reliable way.

According to the present invention, there is provided a system comprising at least one unmanaged switch having at least one first port, at least one second port, and at least one register for controlling the at least one first port and at least one second port; at least one master device, connected to the first port of the switch, wherein the master device is adapted to send tagged ethernet frames to modify said register.

There is also provided a method, according to the invention, for configuring at least one unmanaged switch having at least one first port, at least one second port, and at least one register for controlling said at least one first port and at least one second port. The method comprises the steps of: comprising the steps of: connecting a master device to a first port of an unmanaged switch; creating tagged ethernet frames by the master device, the tagged ethernet frames comprising configuration information for at least one register of the switch; sending the tagged ethernet frames to the register of the switch through the first port.

According to the system and method of the present application, the configuration of the second ports of the switch can be achieved by sending tagged Ethernet frames to the switch's register. Since the tagged ethernet frames are created and send by a master device through the first port of the switch, the configuration process is carried out effortlessly and with high reliability. Therefore, according to the present application, it is become feasible to configure an unmanaged switch.

### Description of Drawings

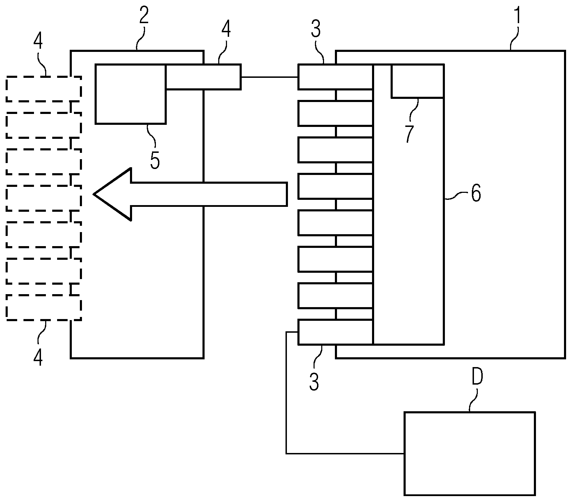

Figure 1 illustrates an exemplary block diagram of the system of the present invention.

The reference numbers used in figures possess the following meanings:

| | |
|---|---|
| Switch | (S) |
| Master device | (M) |
| First port | (1) |
| Second port | (2) |
| Register | (3) |
| Ethernet port | (4) |
| Linux command interface | (5) |
| Distributed switch architecture | (6) |

### Detailed Description of the Invention

Referring to FIG. 1, the system of the present application comprises an unmanaged switch (S) having a first port (1), a second port (2), and a register (3). In some exemplary embodiments of the invention, there is provided one register for each first port (1) and for each second port (2). The register (3) is configured to control the first port (1) and the second port (2). The system further comprises a master device (M) connected to the first port (1) of the switch (S). The master device (M) is adapted to send tagged ethernet frames to modify said register (3).

In some exemplary embodiments of the present invention, the switch (S) may be utilized in an industrial environment, as such a plurality of devices may be connected to the second ports (2) of the switch (S). In order to configure the second ports (2), tagged ethernet frames are sent from the master device (M) to the register (3) of the switch (S) through the first port (1). The tagged ethernet frames comprise configuration information for the register (3). As the register (3) can control the first port (1) and the second port (2), through sending the tagged ethernet frames to the register (3), the second ports (2) can be configured, which provides a configurable unmanaged switch (S).

In some exemplary embodiments of the present invention, the master device (M) can be a computer with Linux based operating system. In such an embodiment, the master device (M) comprises at least one Linux command interface (5) for creating tagged ethernet frames. The master device (M) may further comprise at least one distributed switch architecture (6) for sending the tagged ethernet frames created using the Linux command interface (5) to the register (3).

In some exemplary embodiments of the present invention, a software algorithm, which may be developed as a dedicated software or an available application such as Wireshark, Ostinato, etc., can be utilized for creating tagged ethernet frames having configuration information for the register (3) and sending the tagged ethernet frames to the register (3) through the first port (1).

In some exemplary embodiments of the present invention, a kernel subsystem of the operating system of the master device (M) or a kernel driver of the master device (M) may be utilized for creating tagged ethernet frames having configuration information for the register (3) and sending the tagged ethernet frames to the register (3) through the first port (1).

In some exemplary embodiments of the present invention, a Linux master device (M) may be utilized to configure the switch (S) with a Remote Management connection. A Remote Management Unit may be selected as communication medium to reach switch (S) registers (3) of switch (S) ASIC (Application Specific Integrated Circuit). Linux may be selected as master device's (M) operating system, since Linux Switch Subsystem would be a perfect fit to meet all requirements with the available tools.

The subsystem may use a physical switch (S) for accelerating what Linux can already perform. A term "bridge functionality offloading" can be used to refer to this approach. The bridge functionality offloading may be managed by the registration operation, which may end up with offloading all ports as Virtual network interface cards (NICs) in Linux Device. These Virtual NICs may be used for port-based configurations.

The unmanaged switches (S) may have no interface for configuration. The Linux master device (M) may be regarded as remote interface for configuration medium with the help of distributed switch architecture (6), however it may have some additional functional capabilities with the help of other Switch Subsystems and Drivers which may work together with distributed switch architecture (6).

Various operations may be supported by Linux with the help of standard tools and frameworks such as Switchdev, Iproute2, Bridge and Ethtool. The tools may have support for most of the fundamental implementations such as creating port based virtual local area networks (VLANs), configuring Auto-Negotiation advertisement or reading port-based statistic. Configuring unicast learning preference in one second port (2) may be a good example to understand the concept. The standard bridge tool may have an implementation to set unicast learning preferences of one second port (2) that may be added to the bridge (the second port (2) can be managed and tracked by Linux with virtual representation of it, during the joining bridge operation). ASIC driver may have functions to manipulate related ASIC register (3) and these functions may be triggered by related the bridge command from the user space.

## Claims

1. A system comprising at least one unmanaged switch (S) having at least one first port (1), at least one second port (2), and at least one register (3) for controlling said at least one first port (1) and at least one second port (2), **characterized by** further comprising, at least one master device (M), connected to the first port (1) of the switch (S), wherein the master device (M) is adapted to send tagged ethernet frames to modify said register (3).

2. A system according to claim 1, **characterized in that** the master device (M) is a computer with Linux based operating system.

3. A system according to claim 2, **characterized in that** the master device (M) comprises at least one Linux command interface (5) for creating tagged ethernet frames.

4. A system according to claim 3, **characterized in that** the master device (M) comprises at least one distributed switch architecture (6).

5. A method for configuring at least one unmanaged switch (S) having at least one first port (1), at least one second port (2), and at least one register (3) for controlling said at least one first port (1) and at least one second port (2), **characterized by** comprising the steps of:
a. connecting a master device (M) to the first port (1) of an unmanaged switch (S);
b. creating tagged ethernet frames by said master device (M) comprising configuration information for said register (3) of the switch (S);
c. sending said tagged ethernet frames to the register (3) of the switch (S) through the first port (1).

6. A method according to claim 5, **characterized by** using a software algorithm for the steps b and c.

7. A method according to claim 5, **characterized by** using a kernel subsystem of the operating system of the master device (M) for the steps b and c.

8. A method according to claim 5, **characterized by** using a kernel driver of the master device (M) for the steps b and c.
